# EUROPÄISCHE PATENTSCHRIFT

(11) **EP 2 273 141 B1**
(45) Veröffentlichungstag und Bekanntmachung des Hinweises auf die Patenterteilung: **06.03.2013**
(21) Anmeldenummer: 10007043.2
(22) Anmeldetag: 08.07.2010
(51) Int. Cl.: F16D 1/033

(54) **Baugruppe**
Assembly
Bloc

(30) Priorität: 09.07.2009 AT 10742009
(43) Veröffentlichungstag der Anmeldung: 12.01.2011
(73) Patentinhaber: Miba Sinter Austria GmbH, 4663 Laakirchen (AT)
(72) Erfinder: Dickinger, Karl, 4655 Vorchdorf (AT); Viechtbauer, Martin, 4655 Vorchdorf (AT); Winterbacher, Günter, 4655 Vorchdorf (AT)
(74) Vertreter: Ofner, Clemens

(56) Entgegenhaltungen:
- DE-A1- 2 402 218
- DE-A1- 2 812 783
- DE-A1- 10 146 130
- US-A- 4 890 889
- US-A- 5 577 972

## Beschreibung

Die Erfindung betrifft eine Baugruppe zur Übertragung eines Drehmoments umfassend zwei Bauelemente, die an jeweils zumindest einer Oberfläche in direktem Kontakt miteinander angeordnet sind, entsprechend dem Oberbegriff des Anspruches 1, sowie ein Verfahren zur Herstellung einer Stirnpressverbindung zwischen zwei an Stirnflächen in direktem Kontakt stehenden Bauelementen einer Baugruppe zur Übertragung eines Drehmoments, entsprechend dem Oberbegriff des Anspruches 7.

Die Entwicklung der Antriebstechnik in Kraftfahrzeugen zeichnet sich durch immer kleiner werdende Bauteile für immer leistungsstärkere Motoren aus. Es ist dabei durchaus üblich, mehrere, eine Drehmoment übertragende Bauelemente miteinander zu koppeln, wobei mit diesen Bauelementen gleiche oder verschiedene Antriebe, z.B auch Antriebe für Nebenaggregate, verbunden sein können. Beispielsweise werden mit Verzahnungen ver-sehene Räder über deren Stirnflächen miteinder verpannt. Durch die kleiner werdenen Bauteile ist damit aber verbunden, dass die Fläche, über die diese Bauteile aneinander anliegen, ebenfalls kleiner wird. Damit ist das übertragbare Moment ebenfalls reduziert. Mit anderen Worten ausgedrückt beginnen sich die aneinander anliegenden Bauteile bereits bei kleineren anliegenden Momenten gegeneinander zu verdrehen.

Im Stand der Technik wurde bereits beschrieben, Scheiben mit reibungserhöhenden Oberflächenschichten zwischen diesen Bauelementen anzuordnen. Diese weisen einen Belag aus einer Nickelmatrix mit darin eingelagerten Diamantkristallen auf. Die mittlere Diamantkomgröße bewegt sich im Bereich zwischen 6 µm und 20 µm und die Diamantkonzentration beträgt ca. 10 Flächenprozent. Der Kornüberstand der äußeren Diamantkristalle beträgt etwa 50 % der mittleren Diamantkorngröße. Es kann damit eine Erhöhung der Kraftübertragung erzielt werden.

Mit diesen Scheiben werden zwar höhere Verdrehsicherheiten erreicht, allerdings sind diese Scheiben relativ teuer und erfordern zudem einen höheren logistischen Aufwand bei der Fertigung von Serienprodukten.

Aus der US 5,577,972 A ist ein Abstandhalter für eine Riemenscheibe zur Verwendung in einem Verbrennungsmotor in Form einer kreisförmigen Scheibe bekannt. Die Scheibe weist an der Vorderfläche eine Ringnut mit einer vorbestimmten Breite auf, in die ein Ringsteg auf der Oberfläche der Riemenscheibe eingreift.

Aufgabe vorliegender Erfindung ist es, die Drehmomentübertragung für Kfz-Antriebe zu verbessen.

Diese Aufgabe wird jeweils eigenständig dadurch gelöst, dass bei der eingangs erwähnten Baugruppe die Erhebungen zahnförmig ausgebildet sind, wobei jede zweite Erhebung in axialer Richtung höher ist als die dazwischen liegenden Erhebungen, sowie durch das eingangs genannte Verfahren zur Herstellung einer Stirnpressverbindung nach dem die Erhebungen zahnförmig ausgebildet werden, wobei jede zweite Erhebung in axialer Richtung höher als die dazwischen liegenden Erhebungen ausgebildet wird.

Von Vorteil ist dabei, dass durch eine relativ einfache Maßnahme, die bereits bei der Herstellung der Bauelemente selbst berücksichtigt werden kann, ein Formschluss zwischen diesen beiden Bauelementen erreicht wird, sodass das übertragbare Drehmoment nicht mehr ausschließlich von der Haftreibung zwischen den beiden aneinander anliegenden Planflächen beschränkt wird. Es kann damit auch auf die Anordnung der teuren, voranstehend genannten Zwischenscheiben verzichtet werden. Zudem wird damit der Vorteil einer besseren Positionierbarkeit der beiden Bauteile zueinander erreicht. Dies ist insbesondere von Vorteil, wenn zwei Räder mit Verzahnungen in einer bestimmten Stellung der Verzahnugen zueinander eingebaut werden müssen. Dies erweist sich auch als Vorteil, wenn die Baugruppe wegen Reperaturarbeiten zerlegt werden muss. Eine derartige Positionierung ist mit den Zwischenscheiben nicht möglich. Zudem wird damit erreicht, dass Antriebselemente, wie z.B. Zahnräder mit zumindest zwei Verzahnungen, die bisher zur Vermeidung dieses Problems des Durchrutschens einstückig hergestellt wurden, auch aus gesonderten Bauteilen gefertigt werden können, wodurch entsprechend einfachere und damit kostengünstigere Formen verwendet werden können, und damit auch Prob-leme in der Herstellung, wie z.B. hinsichtlich des Entformens oder der Oberflächenbehandlung der Verzahnungen, vermieden werden können.

Zur Verbesserung des Formschlusses ist es von Vorteil, wenn ein Querschnittsverlauf der Vertiefung(en) zumindest annähernd invers ist zu einem Querschnittsverlauf der korrespondierenden Erhebung(en), in gleicher Richtung betrachtet, ausgebildet ist. Es ist damit auch die relative Positionierung der beiden Bauelemente zueinander einfacher durchführbar.

Eine weitere Verbesserung des Formschlusses kann erreicht werden, wenn zumindest eine Abmessung der Vertiefung(en) kleiner ist als die korrespondierende Abmessung der Erhebung(en). Es wird damit eine stärkere Verpressung der Erhebungen in den Vertiefungen durch eine teilweise Materialverdrängung im Bereich der Erhebungen und/oder der Vertiefungen erreicht.

Eine absolute Positionierung der Bauelemente zueinander wird erreicht, wenn bei mehreren Vertiefungen und Erhebungen eine Vertiefung und eine dazu korrespondierende Erhebung durch ihre unterschiedliche Größe und/oder unterschiedliche Lage in Bezug auf die weiteren Vertiefungen und Erhebungen eine Positionsmarke bilden.

Es ist weiters von Vorteil, dass mit der Erfindung die beiden Bauelemente zumindest annähernd die gleiche Härte aufweisen können, da hinsichtlich der Eindrückbarkeit der Erhebungen in das Material des Gegenelementes keine Einschränkungen bestehen. Dies ist insbesondere in Hinblick auf die geometrische Auslegung der Bauelemente zur Übertragung bestimmter Mindestmomente bzw. Mindestkräfte und hinsichtlich deren Standzeiten von Vorteil.

Es sei in diesem Zusammenhang erwähnt, dass unter dem Begriff "zumindest annähernd gleiche Härte" im Rahmen der Erfindung gemeint ist, dass Unterschiede der Härten im Rahmen der Toleranz zulässig sind, die Härten also um ± 5 % voneinander abweichen können.

Die Bauelemente sind als Zahnrad, Zahnriemenrad oder Kettenrad ausgebildet, wobei auch unterschiedliche dieser Räder miteinander kombiniert werden können.

In Hinblick auf die Herstellung und damit die Reduzierung der Kosten für die Baugruppe ist es von Vorteil, wenn die Bauelemente aus einem Sinterwerkstoff gebildet sind. Es können damit die entsprechenden Vertiefungen und Erhebungen bereits während der Formgebung berücksichtigt werden, sodass eine diesbezügliche mechanische Nach-bearbeitung nicht erforderlich ist.

Gemäß einer Ausführungsvariante des Verfahrens ist vorgesehen, dass die Vertief-ung(en) während des Verspannens durch die Erhebung(en) ausgebildet werden. Es ist damit nicht erforderlich, dass die Vertiefungen bereits vor dem Zusammenbau in der Oberfläche des Bauelementes vorgesehen werden müssen, wodurch sich die Formen zur Herstellung dieses Bauelementes vereinfachen lassen. Zudem wird damit die relative Lage der Vertiefungen zu den Erhebungen durch die Erhebungen selbst bestimmt, wo-durch der Formschluss verbessert werden kann.

Zum besseren Verständnis der Erfindung wird diese anhand der nachfolgenden Figuren näher erläutert.

Es zeigen jeweils in schematisch vereinfachter Darstellung:
- Fig.1: eine Ausführungsvariante einer erfindungsgemäßen Baugruppe in Seitenansicht geschnitten;
- Fig.2: ein Bauelement in Form eines Kettenrades mit Erhebungen auf einer Stirnfläche in Schrägansicht;
- Fig.3: ein Detail des Kettenrades nach Fig. 2 in Schrägansicht;
- Fig.4: ein Bauelement in Form eines Kettenrades mit einer Vertiefung auf einer Stirnfläche in Seitenansicht geschnitten;
- Fig.5: ein Detail des Kettenrades nach Fig. 4 in Seitenansicht;
- Fig.6 -10: Ausführungsvarianten von Erhebungen in Seitenansicht geschnitten;
- Fig.11-15: Ausführungsvarianten von Vertiefungen in Seitenansicht geschnitten;
- Fig.16: Ausführungsvarianten von diskreten Erhebungen in Schrägansicht;
- Fig.17: eine Ausführungsvariante der Erfindung;
- Fig.18: eine Messvorrichtung zur Messung des Losdrehmomentes einer erfindungsgemä- ßen Stimpressverbindung;
- Fig. 19: ein Diagramm mit den Messergebnissen des Losdrehmomentes einer Ausfüh- rungsvariante der Erfindung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw., auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

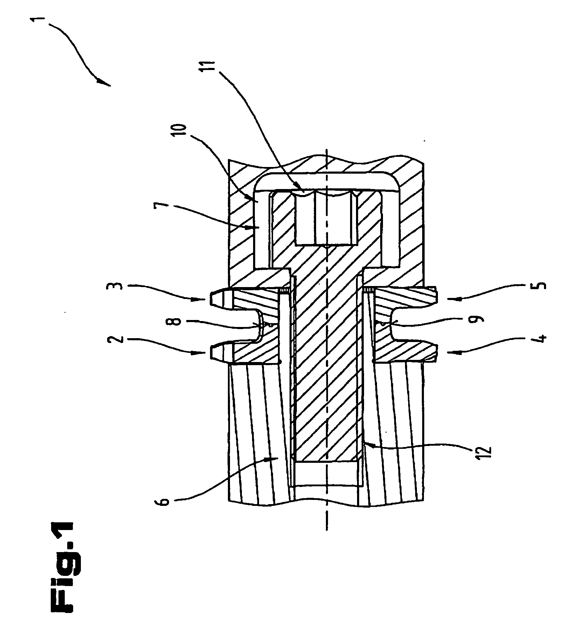

Fig. 1 zeigt eine Ausführungsvariante einer Baugruppe 1 zur Übertragung eines Drehmomentes in Seitenansicht geschnitten. Die Baugruppe 1 umfasst ein erstes und ein zweites Bauelement 2, 3 in Form eines Kettenrades 4 bzw. eines Kettenrades 5, sowie eine Kurbelwelle 6 und eine Nabe 7. Das Kettenrad 5 ist auf der Nabe 7, das Kettenrad 4 ist auf der Kurbelwelle 6 angeordnet (in axialer Richtung betrachtet).

Das Kettenrad 4 hat eine erste Oberfläche 8 und liegt mit dieser an einer Oberfläche 9 des Zahnriemenrades 5 direkt an. Die beiden Oberfläche 8, 9 sind die Stirnflächen - in axialer Richtung betrachtet - der beiden Bauelemente 2, 3.

Die Nabe 7 weist eine Ausnehmung 10 auf, durch die ein Spannelement 11 in Form eines Gewindebolzens geführt ist, der sich bis in eine, mit einem Innengewinde versehene Ausnehmung 12 der Kurbelwelle 6 erstreckt. Durch diese Verschraubung werden die beiden Stirnflächen der Bauelemente 2, 3 gegeneinander gepresst.

Diese Baugruppe 1 ist insbesondere für einen Steuertrieb für eine Ölpumpe vorgesehen.

Es sei darauf hingewiesen, dass die Erfindung auch für andere Baugruppen 1 verwendet werden kann, wie z.B. Nebentriebe von Kfz-Antrieben, Antriebe für Kompressoren, Vakuumpumpen, Ausgleichswellen, Hybridpumpen, etc. Es ist auch nicht zwingend, dass beide Bauelemente 2,3 eine Verzahnung aufweisen, sodass auch andere Baugruppen 1 im Sinne der Erfindung möglich sind, wie z.B. Keilriemenantriebe, wobei ein Bauelemente 2 als Keilriemenscheibe ausgebildet ist, Schwingungstilger, etc. Insbesondere findet die Erfindung Anwendung im Kfz-Bereich.

Es sind weiters auch andere Kombinationen von Bauelementen 2, 3 möglich, wie z.B. ein Zahnrad mit einem Zahnrad oder einem Zahnriemenrad oder einem Kettenrad, ein Kettenrad mit einem Zahnrad oder einem Zahnriemenrad, bzw. ein Zahnriemenrad mit einem Zahnrad oder einem Zahnriemenrad oder einem Kettenrad.

Des weiteren ist es möglich, dass mehr als zwei Bauelemente 2, 3 miteinander verwendet werden, sodass es im Rahmen der Erfindung auch möglich ist, dass zumindest zwei Oberflächen bzw. Stirnflächen zumindest eines Bauelement 2, 3 erfindungsgemäß ausgebildet ist.

Anstelle des Gewindebolzens können auch andere Spannelemente 11 verwendet werden, wie z.B. hydraulische Verspannungen.

Da der prinzipielle Aufbau derartiger Baugruppen 1 aus dem Stand der Technik bekannt ist, sei an die einschlägige Literatur dazu verwiesen.

Die Bauelemente 2, 3 bestehen bevorzugt aus einem gesinterten Werkstoff, beispielsweise einem Sinterstahl, der auch Legierungselemente wie Si, Cr, Mo, Ni, etc. enthalten kann. Derartige Werkstoffe sowie das Sinterverfahren an sich sind ebenfalls aus dem Stand der Technik bekannt, sodass sich eine weitere Erörterung erübrigt.

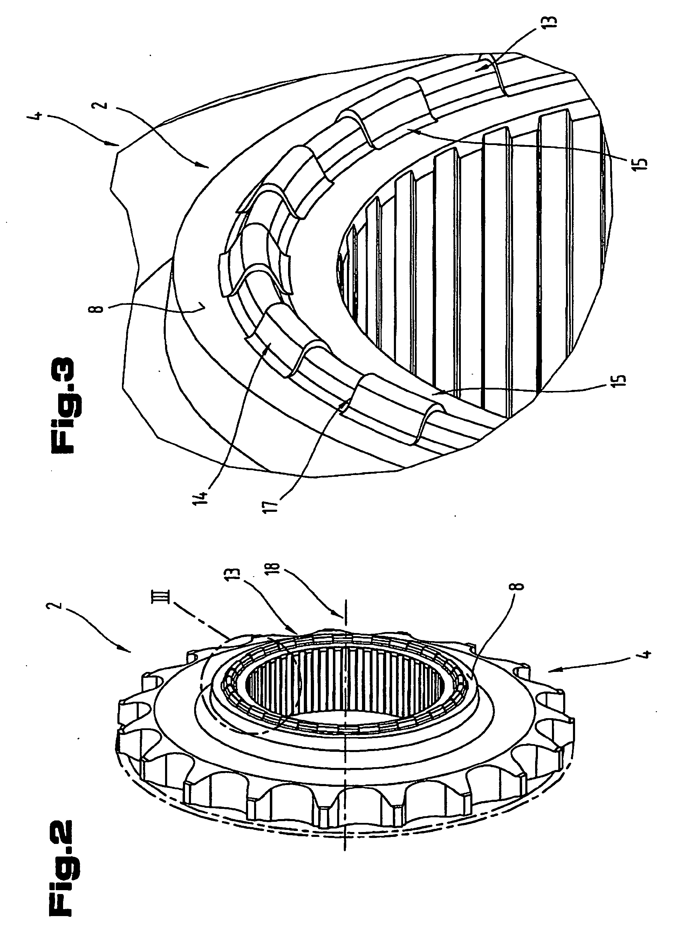

Die Fig. 2 und 3 zeigen eine erste Ausfühungsvariante eines erfindungsgemäßen Bauelementes 2 in Form eines Kettenrades 4, wie es z.B. in einer Baugruppe 1 nach Fig. 1 verwendet werden kann, in Schrägansicht bzw. Detailansicht. Dieses Bauelement 2 weist an der Oberfläche 8, d.h. seiner Stirnfläche (in axialer Richtung), mehrere Erhebungen 13 auf, die über die Oberfläche 8 in axialer Richtung vorragen. Die Erhebungen 13 sind im Querschnitt betrachtet zahnförmig ausgeführt, mit zwei Zahnflanken 14, 15 und einem Zahnkopf 16. Getrennt sind diese Erhebungen 13 durch Einkerbungen 17. Jede zweite Erhebung 13 ist in axialer Richtung höher als die dazwischen liegenden Erhebungen 13. Die Erhebungen 13 sind entlang eines Kreises angeordnet, sodass also jede Erhebung 13 den gleichen Abstand von einer Längsmittelachse 18 aufweist. Bevorzugt sind sämtliche Übergänge im Bereich der und auf den Erhebungen 13 mit Rundungen versehen.

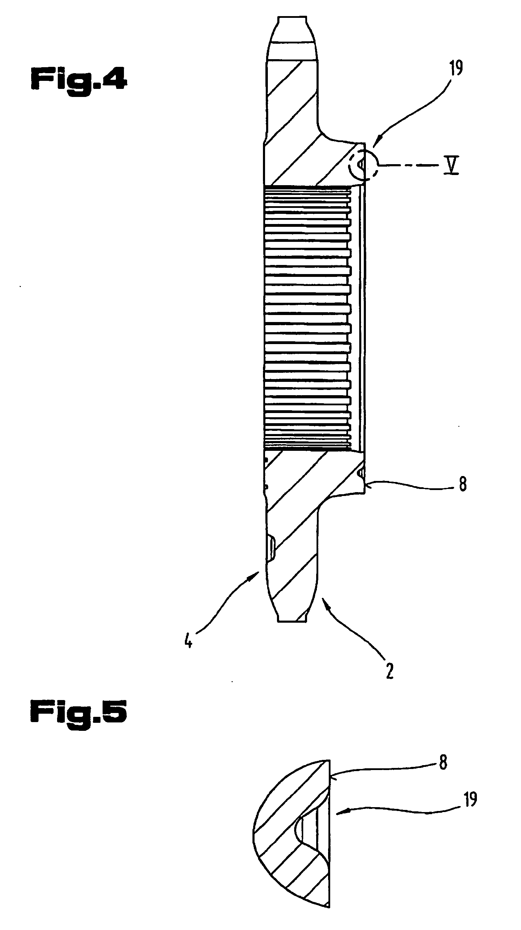

Die Fig. 4 und 5 zeigen eine Ausführungsvariante eines erfindungsgemäßen Bauelementes 2 in Form eines Kettenrades 4, wie es z.B. in einer Baugruppe 1 nach Fig. 1 zusammen mit dem Kettenrad 4 nach den Fig. 2 und 3 verwendet werden kann, in Schrägansicht bzw. Detailansicht. Dieses Bauelement weist an der Oberfläche 8, d.h. seiner Stirnfläche (in axialer Richtung), eine Vertiefung 19 in Form einer Ringnut auf. Wie insbesondere Fig. 5 zeigt, ist der Querschnittsverlauf dieser Vertiefung 19 bzw. Ausnehmung invers zum Querschnittsverlauf der Erhebungen 13 nach den Fig. 2 und 3 ausgebildet. Hinsichtlich des Abstandes von der Längsmittelachse 18 ist die Vertiefung 19 so situiert, dass die Erhebungen 13 beim Zusammenspannen der beiden Bauelemente 2 in die Vertiefung 19 eingreifen und so einen Formschluss ausbilden. Die Tiefe der Vertiefung 19 ist bei dieser Ausführungsvariante der Erfindung zumindest so groß wie die Höhe der Erhebungen 13 über der Oberfläche 8.

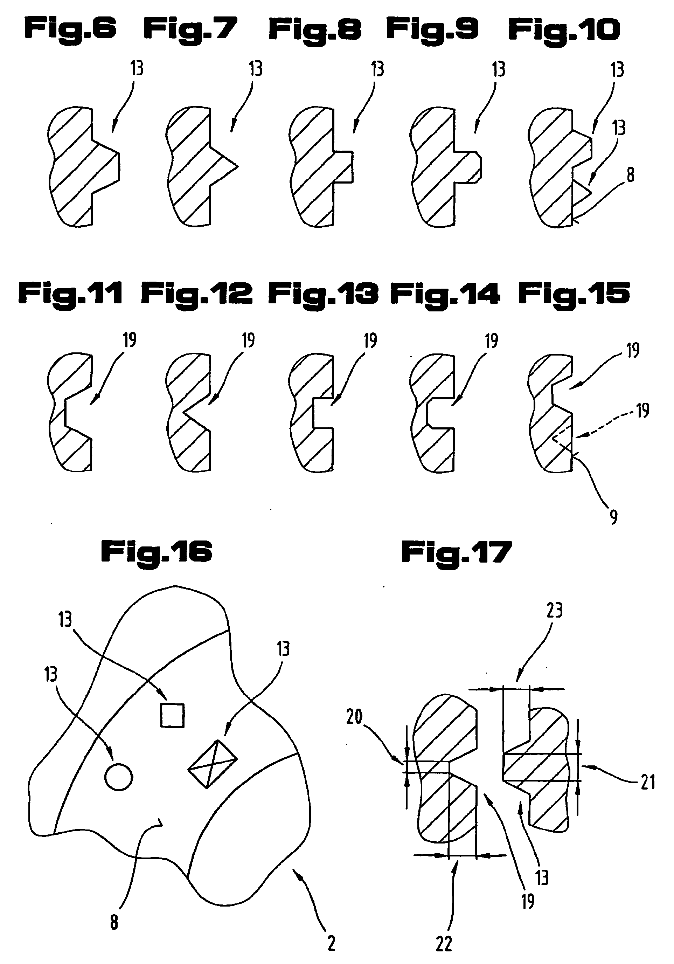

In den Fig. 6 bis 10 und 11 bis 15 sind verschiedene Ausführungsvarianten von Erhebungen 13 bzw. die dazu korrespondierenden Vertiefungen 19 in Seitenansicht geschnitten dargestellt. Es soll damit verdeutlicht werden, dass es im Rahmen der Erfindung möglich ist, dass die Erhebungen 13 und die Vertiefungen 19 unterschiedliche Querschnittformen aufweisen können, beispielsweise trapez- (Fig. 6, 11), dreieck- (Fig. 7, 12), rechteckförmige (Fig. 8, 13) oder polygonale (Fig. 9,14). Die Erhebungen 13 sind bei diesen Ausführungsvarianten als Ringstege ausgeführt, die Vertiefungen 19 als Ringnuten, in die die Erhebungen 13 eingreifen und den Formschluss ausbilden.

Es ist auch möglich mehr als eine Erhebung 13 bzw. Vertiefung 19 auf den Oberflächen 8, 9 anzuordnen, beispielsweise zwei Ringstege, wie dies in den Fig. 10 und 15 dargestellt ist, wobei in diesem Fall zwei Ringstege und zwei Ringnuten in radialer Richtung betrachtet jeweils hintereinander angeordnet sind. Wie aus diesen beiden Figuren ersichtlich ist, können die Erhebungen 13 und die Vertiefungen 19 auch einen unterschiedlichen Querschnitt (in Seitenansicht betrachtet) aufweisen. Es ist also im Rahmen der Erfindung möglich verschiedene Querschnittsverläufe miteinander zu kombinieren.

Mit Fig. 16 soll verdeutlicht werden, dass auf der Oberfläche 8 des Bauelementes 2 diskrete Erhebungen 13 vorgesehen werden können, die in entsprechende, diskrete Vertiefungen 19 (nicht dargestellt) eingreifen können. Es ist aber auch in diesem Fall möglich, dass mehrere Erhebungen 13 in nur eine gemeinsame Vertiefung 19, die entsprechende größer ausgeführt ist, eingreifen. Auch bei diskret angeordneten Erhebungen 13 können diese entlang eines oder mehrerer Kreise(s) auf der Oberfläche 8 angeordnet sein, sodass also die Vertiefung 19 wiederum durch eine oder mehrere Ringnut(en) ausgebildet sein kann. Die Erhebungen 13 können wiederum mit unterschiedlichem Querschnitt ausgerührt sein (in axialer Richtung betrachtet), beispielsweise kreisförmig, quadratisch, rechteckförmig, pyramidal, etc. Es können an einem Bauelement 2 nur gleichartige Erhebungen 13 vorgesehen sein, ebenso ist es möglich Erhebungen 13 mit unterschiedlichen Querschnitten, auch hinsichtlich der Größe von zumindest einer geometrischen Abmessung, anzuordnen. Analoges gilt für die Vertiefungen 19.

In Fig. 17 ist dargestellt, dass es im Rahmen der Erfindung möglich ist, dass die Vertiefung 19 zwar annähernd einen inversen Querschnittverlauf zu jenem der korrespondierenden Erhebung 13 aufweisen kann, allerdings die Geometrie der Vertiefung 19 in zumindest einer Abmessung von der Geometrie der Erhebung 13 abweichen kann. In der gezeigten Ausführungsvariante ist eine minimale Breite 20 in radialer Richtung am Grund der Ausnehmung 19 kleiner als eine minimale Breite 21 der Erhebung 13 am äußeren Ende in derselben Richtung gewählt, wodurch der Formschluss verbessert werden kann. Es besteht alternativ oder zusätzlich dazu die Möglichkeit eine andere Abmessung unterschiedlich zu wählen, beispielsweise eine Tiefe 22 der Vertiefung 19 in axialer Richtung größer oder kleiner zu wählen als eine Höhe 23 der Erhebung 13 in derselben Richtung. Bei mehr als einer Erhebung 13 und gegebenenfalls mehr als einer Vertiefung 19 besteht die Möglichkeit, dass sich nur einzelne der Erhebungen 13 und gegebenenfalls der dazu korrespondierenden Vertiefungen 19 in zumindest einer geometrischen Abmessung unterscheiden. So ist es beispielsweise auch möglich, dass ein Ringsteg nur partiell breiter und/oder höher ausgeführt wird als die dazu korrespondierende Vertiefung. Beispielsweise können die Erhebungen 13 nach den Fig. 2 und 3 zu einem einzelnen Steg zusammengefasst werden, der in seinem Verlauf in Umfangsrichtung unterschiedliche Höhen aufweist. Auch dabei ist es möglich, dass Übergänge zwischen den einzelnen Bereichen mit Rundungen versehen werden. Der Höhenunterschied zwischen den einzelnen Bereichen kann zwischen 0,01 mm und 10 mm betragen. Es ist aber auch möglich, dass der Höhenunterschied zwischen 0,1 mm und 4 mm bzw. zwischen 1 mm und 3 mm beträgt.

Es ist aber auch möglich, dass die Erhebungen 13 in Umfangsrichtung eine unterschiedliche Breite aufweisen, wobei auch hier wiederum Vertiefungen 19 vorgesehen werden können, die eine geringere Breite aufweisen als die maximale Breite der Erhebungen 13 in radialer Richtung. Die Breie in radialer Richtung kann dabei im Bereich zwischen 0,1 % und 95 % der maximalen Gesamtbreite variieren. Es ist aber auch möglich, dass die Breie in radialer Richtung im Bereich zwischen 1 % und 50 %, insbesondere zwischen 10 % und 25 %, der maximalen Gesamtbreite variiert.

Da bei derartigen Ausführungsvarianten der Erfindung mit Erhebungen 13 die sich in zumindest einer geometrischen Abmessung von den Vertiefungen 19 unterscheiden, d.h. größer sind, Material in den Vertiefungen 19 verdrängt werden muss, kann es von Vorteil sein, wenn in oder neben den Vertiefungen 19 Vorkehrungen getroffen werden, um diese Materialverdrängung zu erleichtern, beispielsweise indem in der bzw. den betroffenen Vertiefung(en) 19 Hinterschneidungen oder neben der bzw. den Vertiefung(en) 19 Rillen oder dgl. vorgesehen werden. Es kann also der Querschnittsverlauf der Vertiefungen 19 auch unterschiedlich sein zu jenem der Erhebungen 13 in gleicher Richtung. Selbstverständlich kann dies auch bei den anderen Ausführungsvarianten der Erfindung vorgesehen werden.

Es sei in diesem Zusammenhang der Vollständigkeit halber angeführt, dass die Erhebungen 19 bevorzugt einstückig mit dem jeweiligen Bauelement 2 und aus dessen Material hergestellt sind, wobei sich hier die sintertechnische Herstellung der Bauelemente 2, 3 von Vorteil erweist.

Generell können die Erhebungen 13 eine maximale Höhe 23 in axialer Richtung über der Oberfläche 8 aufweisen, die beispielsweise ausgewählt ist aus einem Bereich mit einer unteren Grenze von 0,01 mm, insbesondere 0,05 mm, vorzugsweise 1 mm, und einer oberen Grenze von 15 mm, insbesondere 12 mm, vorzugsweise 10 mm. Größerer Abmessungen der Erhebungen 13 werden dabei vorzugsweise bei Bauteilen 2, 3 mit größeren Abmessungen verwendet. Die minimale Breite 21 der Erhebungen 13 in radialer Richtung kann ausgewählt sein aus einem Bereich mit einer unteren Grenze von 0,01 %, insbesondere 0,05 %, vorzugsweise 1 %, und einer oberen Grenze von 95%, insbesondere 80 %, vorzugsweise 50 %, der maximalen Breite der Erhebungen 13 in dieser Richtung. Die maximale Breite der Erhebungen 13 in radialer Richtung kann beispielsweise ausgewählt sein aus einem Bereich mit einer unteren Grenze von 0,5 mm, insbesondere 1 mm, vorzugsweise 2,5 mm, und einer oberen Grenze von 15 mm, vorzugsweise 12 mm, insbesondere 10 mm. Im Fall von unterschiedlich hohen Erhebungen 13 kann der Höhenunterschied zwischen 0,01 % und 95 %, insbesondere zwischen 3 % und 80 %, vorzugsweise zwischen 5 % und 40 %, der maximalen Höhe der Erhebungen 13 betragen. Insbesondere kann ein Anteil zwischen 10 % und 90 %, insbesondere zwischen 20 % und 70 %, vorzugsweise zwischen 25 % und 50 %, der gesamten Erhebungen 13 mit größerer Höhe angeordnet werden.

Ebenso können die Vertiefungen 19 eine maximale Tiefe 22 in axialer Richtung aufweisen, die beispielsweise ausgewählt ist aus einem Bereich mit einer unteren Grenze von 0,01 mm, insbesondere 0,05 mm, vorzugsweise 1 mm, und einer oberen Grenze von 15 mm, insbesondere 12 mm, vorzugsweise 10 mm. Größerer Abmessungen der Vertiefungen 19 werden dabei vorzugsweise bei Bauteilen 2, 3 mit größeren Abmessungen verwendet. Die minimale Breite 20 der Vertiefungen 19 in radialer Richtung kann ausgewählt sein aus einem Bereich mit einer unteren Grenze von 0,01 %, insbesondere 0,05 %, vorzugsweise 1 %, und einer oberen Grenze von 95%, insbesondere 80 %, vorzugsweise 50 %, der maximalen Breite der Vertiefungen 19 in dieser Richtung. Die maximale Breite 20 der Vertiefungen 19 in radialer Richtung kann ausgewählt sein aus einem Bereich mit einer unteren Grenze von 0,5 mm, insbesondere 1 mm, vorzugsweise 2,5 mm, und einer oberen Grenze von 15 mm, vorzugsweise 12 mm, insbesondere 10 mm. Für den Fall, dass eine geometrische Abmessung einer Vertiefung 19 kleiner gewählt wird, kann diese zwischen 0,01 % und 25 %, insbesondere zwischen 3 % und 15 %, vorzugsweise zwischen 5 % und 10 %, kleiner sein als die entsprechende geometrische Abmessung der dazu korrespondierenden Erhebung 13.

Im Falle von diskreten Erhebungen 13 und Vertiefungen 19 - es sind auch Mischformen zwischen stegartigen und diskreten Erhebungen 13 und Vertiefungen 19 möglich - ist eine Anzahl der Erhebungen 13 und Vertiefungen 19 bevorzugt ausgewählt aus einem Bereich mit einer unteren Grenze von 1, insbesondere 10, vorzugsweise 20 und einer oberen Grenze von 200, insbesondere 150, vorzugsweise 100. Insbesondere ist der Flächenanteil der Erhebungen 13 bzw. Vertiefungen 19 an den Oberflächen 8, 9 ausgewählt aus einem Bereich mit einer unteren Grenze von 1 %, insbesondere 5 %, vorzugsweise 10 %, und einer oberen Grenze von 70 %, insbesondere 60 %, vorzugsweise 50 %, bezogen auf die Gesamtfläche der Oberflächen 8,9.

Obwohl die regelmäßige Verteilung der Erhebungen 13 und Vertiefungen 19 über die Oberflächen 8, 9 bevorzugt ist, besteht auch die Möglichkeit einer zufälligen Verteilung.

Zumindest eine der Erhebungen 13 und Vertiefungen 19 kann wie voranstehend ausgeführt ausgebildet sein, um eine Positionsmarke zu bilden.

Die ringstegförmige bzw. ringnutförmige Ausbildung der Erhebungen 13 bzw. Vertiefungen 19 bietet den Vorteil, dass die Bauelemente 2, 3 zur richtigen Positionierung gegeneinander verdreht werden können, wenn der Formschluss noch nicht oder nicht vollständig ausgebildet ist.

Es ist im Rahmen der Erfindung weiters möglich, dass in einer bzw. den Oberfläche(n) 8, 9 sowohl Erhebungen 13 als auch Vertiefungen 19 angeordnet werden, sodass der Formschluss in beide Richtungen ausgebildet wird.

Insbesondere ist es aus voranstehenden Gründen von Vorteil, wenn die beiden Bauteile 2, 3 mit der gleichen Härte (wie voranstehend definiert) hergestellt werden. Es ist aber im Rahmen der Erfindung auch möglich, dass Bauteile 2, 3 mit unterschiedlicher Härte über die Stirnpressverbindung miteinander kombiniert werden, beispielsweise indem ein gehärteter Bauteil 2 mit einem nicht gehärteten Bauteil 3 kombiniert wird, um beispielsweise die bessere Verformbarkeit des letzteren für die Herstellung der Stimpressverbindung oder auch eine funktionelle Verformung, z.B. der Verzahnung des Bauteils 3, zu nutzen. In diesem Fall kann der Härteunterschied bis beispielsweise 400 % bzw. 300 % betragen.

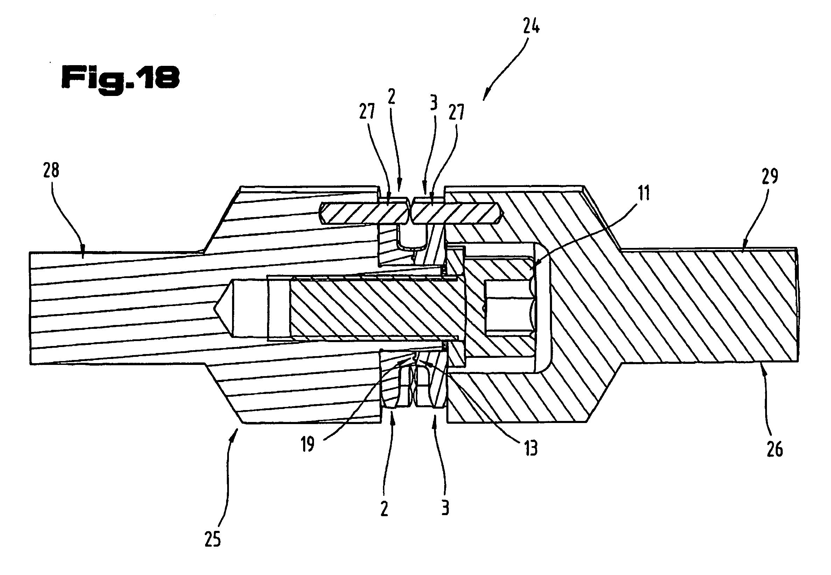

In Fig. 18 ist eine Messvorrichtung 24 im Querschnitt gezeigt, mit der das Losdrehmoment eines Bauelementes 2 von einem Bauelement 3, die mit der Erhebung 13 bzw. der Vertiefung 19 zur Ausbildung einer Stimpressverbindung versehen sind, gemessen wurde. Diese Messvorrichtung 24 umfasst zwei Aufspannelemente 25, 26 zwischen denen die Bauelemente 2, 3 angeordnet werden, wobei diese über einen Schraubbolzen als Spannelement 11 mit dem Auf spannelement 25 verschraubt werden. An den einander zugewandten Oberflächen der Aufspannelemente 25, 26 sind Schrauben 27 vorgesehen, die in das jeweiligen Aufspannelement 25, 26 eingeschraubt sind, und die mit ihrem nach außen vorstehenden Ende in die Verzahnung der Bauelemente 2, 3 eingreifen. Zur Messung des Losdrehmomentes wird das Aufspannelement 26 relativ gegen das Aufspannelement 25 verdreht, wobei über eine Klemme in einem Endbereichen 28 des Aufspannelementes 25 das Drehmoment gemessen und über eine Klemme in einem Endbereich 29 des Aufspannelementes 26 das Drehmoment eingeleitet wird.

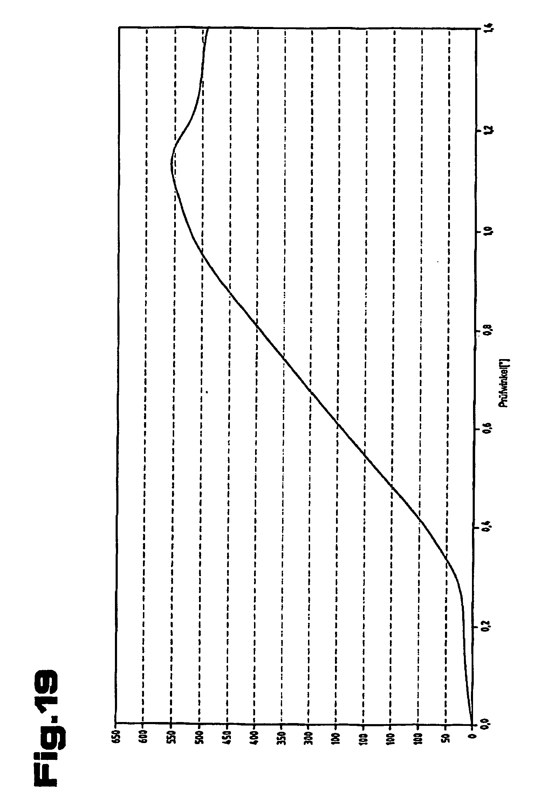

Die Messergebnisse aus der Messung sind in Fig. 19 dargestellt. Dabei ist auf der x-Achse der Prüfwinkel in Grad und auf der y-Achse das Drehmoment in Nm aufgetragen. Gemessen wurde eine Ausführungsvariante gemäß den Fig. 2 und 3, wobei die Erhebung 13 allerdings als Ringsteg ausgeführt war mit partiell unterschiedlichen Höhen wie in Fig. 3 dargestellt. Die Länge in Umfangsrichtung eines partiell höheren Bereiches des Steges hat 10 ° betragen. Insgesamt waren 18 partiell höhere Bereiche vorhanden. Die Vertiefung 1 hatte eine um 2 % geringere minimale Breite 20 in radialer Richtung als die minimale Breite 23 der Erhebung 13 in derselben Richtung. Die Tiefe 22 der Vertiefung 19 war entsprechend der Höhe 23 der Erhebung 13 ausgeführt. Die Erhebung 13 war im Querschnitt annähernd als gleichseitiges Dreieck ausgeführt mit einer Höhe von ca. 0,3 mm.

Aus dem Kurvenverlauf ist ersichtlich, dass bei zunehmendem Verdrehwinkel das Drehmoment ein Maximum durchläuft, ab dem mit zunehmendem Verdrehwinkel das übertragbare Moment wieder abnimmt. Ab diesem Maximum rutscht also das Bauelement 3 durch. Bei der gemessenen Ausführungsvariante betrug der Wert des Drehmomentes ca. 560 Nm. Im Vergleich dazu wurde für eine Baugruppe mit zwei Zahnrädern mit planen aneinander anliegenden Oberflächen ein Wert von ca. 285 Nm und für zwei Zahnräder mit gestrahlten aneinander anliegenden Oberflächen ein Wert von ca. 350 Nm erhalten. Es wird also mit der Erfindung eine deutliche Steigerung des Losdrehmomentes erreicht.

Vergleichbare Werte des Losdrehmomentes wurden auch bei anderen Ausführungsvarianten der Erfindung gemessen, wobei sich das Losdrehmoment im Bereich zwischen 400 Nm und 550 Nm bewegte.

Die Ausführungsbeispiele zeigen mögliche Ausführungsvarianten von Bauelementen 2, 3 mit Erhebungen 13 bzw. Vertiefungen 19, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus der Bauelemente 2, 3 bzw. der Erhebungen 13 bzw. Vertiefungen 19, diese bzw. deren Bestandteile teilweise unmaßstäblich und/oder vergrößert und/oder verkleinert dargestellt wurden.

### Bezugszeichenaufstellung

- 1: Baugruppe
- 2: Bauelement
- 3: Bauelement
- 4: Kettenrad
- 5: Zahnriemenrad

- 6: Kurbelwelle
- 7: Nabe
- 8: Oberfläche
- 9: Oberfläche
- 10: Ausnehmung

- 11: Spannelement
- 12: Ausnehmung
- 13: Erhebung
- 14: Zahnflanke
- 15: Zahnflanke

- 16: Zahnkopf
- 17: Einkerbung
- 18: Längsmittelachse
- 19: Vertiefung
- 20: Breite

- 21: Breite
- 22: Tiefe
- 23: Höhe
- 24: Messvorrichtung
- 25: Aufspannelement

- 26: Aufspannelement
- 27: Schraube
- 28: Endbereich
- 29: Endbereich

## Patentansprüche

1. Baugruppe (1) zur Übertragung eines Drehmoments umfassend zwei Bauelemente (2, 3), die an jeweils zumindest einer, jeweils eine Planfläche bildende Oberfläche (8, 9) in direktem Kontakt miteinander angeordnet sind, wobei an den beiden Oberflächen (8, 9) zumindest eine Erhebung (13) und/oder zumindest eine Vertiefung (19) angeordnet ist, mit der Maßgabe, dass für eine Erhebung (13) an einer Oberfläche (8) des einen Bauelementes (2) eine Vertiefung (19) in der diese kontaktierenden Oberfläche (9) des anderen Bauelementes (3) vorgesehen ist, und wobei die zumindest eine Erhebung (13) ringstegförmig und die zumindest eine Vertiefung (19) ringnutförmig ausgebildet ist, die Bauelemente (2, 3) als Keilriemenscheibe, Zahnrad, Zahnriemenrad (5) oder Kettenrad (4) ausgebildet sind und zumindest eine Abmessung der Vertiefung(en) (19) kleiner ist als die korrespondierende Abmessung der Erhebung(en) (13), **dadurch gekennzeichnet, dass** die Erhebungen (13) zahnförmig ausgebildet sind, wobei jede zweite Erhebung (13) in axialer Richtung höher ist als die dazwischen liegenden Erhebungen (13).

2. Baugruppe (1) nach Anspruch 1, **dadurch gekennzeichnet, dass** ein Querschnittsverlauf der Vertiefung(en) (19) zumindest annähernd invers ist zu einem Querschnittsverlauf der korrespondierenden Erhebung(en) (13), in gleicher Richtung betrachtet, ausgebildet ist.

3. Baugruppe (1) nach einem der Ansprüche 1 oder 2, **dadurch gekennzeichnet, dass** die beiden Bauelemente (2, 3) zumindest annähernd die gleiche Härte aufweisen.

4. Baugruppe (1) nach einem der Ansprüche 1 bis 3, **dadurch gekennzeichnet, dass** die Bauelemente (2, 3) aus einem Sinterwerkstoff gebildet sind.

5. Baugruppe (1) nach einem der Ansprüche 1 bis 4, **dadurch gekennzeichnet, dass** ein Höhenunterschied der Erhebungen (13) zwischen 0,01 % und 95 % der maximalen Höhe der Erhebungen (13) betragen.

6. Baugruppe (1) nach Anspruch 1 oder 5, **dadurch gekennzeichnet, dass** ein Anteil zwischen 10 % und 90 % der gesamten Erhebungen (13) mit größerer Höhe angeordnet ist.

7. Verfahren zur Herstellung einer Stirnpressverbindung zwischen zwei an planen Stirnflächen in direktem Kontakt stehenden Bauelementen (2, 3) einer Baugruppe (1) zur Übertragung eines Drehmoments, wobei an den Stirnflächen der beiden Bauelemente (2, 3) zumindest eine Erhebung (13) und/oder Vertiefung (19) ausgebildet wird, mit der Maßgabe, dass für eine Erhebung (13) an einer Oberfläche (8) des einen Bauelementes (2) eine Vertiefung (19) in der diese kontaktierenden Oberfläche (9) des anderen Bauelementes (3) vorgesehen wird, und die beiden Bauteile (2, 3) über ein Spannelement miteinander verspannt werden, als Bauelemente (2, 3) Keilriemenscheiben, Zahnräder, Zahnriemenräder (5) oder Kettenräder (4) verwendet werden und zumindest eine Abmessung der Vertiefung(en) (19) kleiner hergestellt wird als die korrespondierende Abmessung der Erhebung(en) (13), **dadurch gekennzeichnet, dass** die Erhebungen (13) zahnförmig ausgebildet werden, wobei jede zweite Erhebung (13) in axialer Richtung höher als die dazwischen liegenden Erhebungen (13) ausgebildet wird.

8. Verfahren nach Anspruch 7, **dadurch gekennzeichnet, dass** die Vertiefung(en) (19) während des Verspannens durch die Erhebung(en) (13) ausgebildet werden.

## Claims

1. Assembly (1) for transmitting a torque, comprising two components (2, 3) which are disposed in direct contact with one another respectively by at least one surface (8, 9) forming a flat surface, and at least one elevation (13) and/or at least one recess (19) is disposed on the two surfaces (8, 9) with the proviso that for an elevation (13) on a surface (8) of one component (2) a recess (19) is provided in the surface (9) of the other component (3) contacting it, and the at least one elevation (13) is of an annular web shape and the at least one recess (19) is of an annular groove shape, the components (2, 3) being designed as a V-belt pulley, gear, cog belt gear (5) or sprocket (4), and at least one dimension of the recess(es) (10) is smaller than the corresponding dimension of the elevation(s) (13), **characterised in that** the elevations (13) are of a tooth-shaped design and every second elevation (13) is higher in the axial direction than the elevations (13) lying in between.

2. Assembly (1) as claimed in claim 1, **characterised in that** a cross-sectional contour of the recess(es) (19) is at least approximately the inverse of a cross-sectional contour of the corresponding elevation(s) (13) as viewed in the same direction.

3. Assembly (1) as claimed in one of claims 1 or 2, **characterised in that** the two components (2, 3) are of at least approximately the same hardness.

4. Assembly (1) as claimed in one of claims 1 to 3, **characterised in that** the components (2, 3) are made from a sintered material.

5. Assembly (1) as claimed in one of claims 1 to 4, **characterised in that** a difference in height of the elevations (13) is between 0.01 % and 95 % of the maximum height of the elevations (13).

6. Assembly (1) as claimed in claim 1 or 5, **characterised in that** a proportion of between 10 % and 90 % of all the elevations (13) is provided with a greater height.

7. Method of producing an end face press connection between two components (2, 3) of an assembly (1) in direct contact in order to transmit a torque, at least one elevation (13) and/or recess (19) being provided on the end faces of the two components (2, 3) with the proviso that for an elevation on a surface (8) of one component (2) a recess (19) is provided in the surface (9) of the other component (3) in contact with it, and the two components (2, 3) are clamped to one another by means of a clamping element, and V-belt pulleys, gears, cog belt gears (5) or sprockets (4) are used as the components (2, 3), and at least one dimension of the recess(es) (19) is produced so that it is smaller than the corresponding dimension of the elevation(s) (13), **characterised in that** the elevations (13) are of a tooth-shaped design and every second elevation (13) is higher in the axial direction than the elevations (13) lying in between.

8. Method as claimed in claim 7, **characterised in that** the recess(es) (19) are formed by the elevation(s) (13) during clamping.

## Revendications

1. Bloc (1) pour la transmission d'un couple de rotation comprenant deux composants (2, 3) qui sont disposés à respectivement au moins une surface (8, 9), formant respectivement une face plane, en contact direct l'un avec l'autre, où est disposé aux deux surfaces (8, 9) au moins une surélévation (13) et/ou au moins un creux (19), à condition que soit prévu pour une surélévation (13) à une surface (8) d'un composant (2) un creux (19) dans la surface (9) venant en contact avec celle-ci de l'autre composant (3), et où la au moins une surélévation (13) est réalisée en forme de nervure annulaire et le au moins un creux (19) est réalisé en forme de rainure annulaire, les composants (2, 3) étant réalisés comme poulie d'entraînement, roue dentée, poulie crantée (5) ou poulie à chaîne (4), et au moins une dimension du ou des creux (19) est plus petite que la dimension correspondante de la ou des surélévations (13), **caractérisé en ce que** les surélévations (13) sont réalisées en une forme dentée, chaque deuxième surélévation (13) étant plus haute dans la direction axiale que les surélévations (13) situées entre celles-ci.

2. Bloc(1) selon la revendication 1, **caractérisé en ce que** le tracé en section transversale du ou des creux (19) est au moins approximativement inverse à un tracé en section transversale de la ou des surélévations correspondantes (13), vu dans la même direction.

3. Bloc (1) selon l'une des revendications 1 ou 2, **caractérisé en ce que** les deux composants (2, 3) ont au moins approximativement la même dureté.

4. Bloc (1) selon l'une des revendications 1 à 3, **caractérisé en ce que** les composants 2, 3) sont réalisés à partir d'un matériau de frittage.

5. Bloc (1) selon l'une des revendications 1 à 4, **caractérisé en ce qu'**une différence de hauteur des surélévations (13) représente entre 0,01 % et 95 % de la hauteur maximale des surélévations (13).

6. Bloc (1) selon la revendication 1 ou 5, **caractérisé en ce qu'**une part entre 10 % et 90 % de l'ensemble des surélévations (13) d'une plus grande hauteur est disposée.

7. Procédé de réalisation d'un assemblage par pression de faces frontales entre deux composants (2, 3) en contact direct à deux faces frontales planes d'un bloc (1) pour la transmission d'un couple de rotation, où est réalisé aux faces frontales des deux composants (2, 3) au moins une surélévation (13) et/ou un creux (19), à condition que soit prévu pour une surélévation (13) à une surface (8) d'un composant (2) un creux (19) dans la surface (9) venant en contact avec celle-ci de l'autre composant (3), et les deux composants (2, 3) sont serrés l'un contre l'autre par un élément de serrage, que soient utilisés comme composants (2, 3) des poulies d'entraînement, roues dentées, poulies crantées (5) ou poulies à chaîne (4), et au moins une dimension du ou des creux (19) est plus petite que la dimension correspondante de la ou des surélévations (13), **caractérisé en ce que** les surélévations (13) sont réalisées en une forme dentée, chaque deuxième surélévation (13) étant plus haute dans la direction axiale que les surélévations (13) situées entre celles-ci.

8. Procédé selon la revendication 7, **caractérisé en ce que** le ou les creux (19), pendant le serrage, sont formés par la ou les surélévations (13).
